(19) Europäisches Patentamt
European Patent Office
Office européen des brevets

(11) **EP 3 830 652 B1**

(12) **EUROPÄISCHE PATENTSCHRIFT**

(45) Veröffentlichungstag und Bekanntmachung des Hinweises auf die Patenterteilung:
**01.03.2023 Patentblatt 2023/09**

(21) Anmeldenummer: **19752954.8**

(22) Anmeldetag: **29.07.2019**

(51) Internationale Patentklassifikation (IPC):
**G05B 17/02** (2006.01)    **G05B 19/042** (2006.01)

(52) Gemeinsame Patentklassifikation (CPC):
**G05B 17/02; G05B 19/042; Y02P 90/02**

(86) Internationale Anmeldenummer:
**PCT/EP2019/070319**

(87) Internationale Veröffentlichungsnummer:
**WO 2020/025521 (06.02.2020 Gazette 2020/06)**

(54) **VERFAHREN ZUR SYNCHRONISIERUNG UND ZUM BETREIBEN EINER INDUSTRIELLEN ANLAGE, VORRICHTUNG, COMPUTERPROGRAMMPRODUKT UND COMPUTERLESBARES MEDIUM**

METHOD FOR SYNCHRONIZING AND FOR OPERATING AN INDUSTRIAL INSTALLATION, SYSTEM, AND COMPUTER READABLE MEDIUM AND COMPUTER PROGRAM PRODUCT

PROCÉDÉ DE SYNCHRONISATION ET DE FONCTIONNEMENT D'UNE INSTALLATION INDUSTRIELLE, DISPOSITIF, PRODUIT PROGRAMME INFORMATIQUE ET SUPPORT LISIBLE PAR ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2018 EP 18187026**

(43) Veröffentlichungstag der Anmeldung:
**09.06.2021 Patentblatt 2021/23**

(73) Patentinhaber: **Siemens Aktiengesellschaft 80333 München (DE)**

(72) Erfinder: **MERKEL, Matthias 76829 Landau (DE)**

(56) Entgegenhaltungen:
EP-A2- 0 301 527        WO-A1-99/38054
DE-A1-102016 222 732    US-A- 6 144 897

• **TILL HEINZERLING ET AL: "Gerätemodelle in Prozess-simulation integrieren", ATP EDITION, Bd. 59, Nr. 10, 17. November 2017 (2017-11-17), Seite 34, XP055547884, DE ISSN: 2190-4111, DOI: 10.17560/atp.v59i10.1894 in der Anmeldung erwähnt**

EP 3 830 652 B1

**Beschreibung**

Die Erfindung betrifft ein Verfahren zur Synchronisierung eines der Simulation einer realen industriellen Anlage dienenden Anlagenmodells mit einer realen Anlage und zum Betreiben der industriellen Anlage. Darüber hinaus betrifft die Erfindung ein eine Vorrichtung, ein Computerprogrammprodukt und ein computerlesbares Medium.

In industriellen Anlagen, etwa Prozessanlagen, können über Messstellen an und/oder in Anlagenkomponenten, bei denen es sich beispielsweise um Tanks oder Rohrleitungen handeln kann, Prozesswerte zur Überwachung, Steuerung und Regelung gewonnen werden. Die Messung besteht dabei aus dem jeweiligen Messaufbau, dem Messprinzip und dem verwendeten Feldgerät, welches in der Regel wenigstens einen Sensor und Messumformer aufweist.

Zur Automatisierung, insbesondere zur automatischen Steuerung und/oder Überwachung von auf industriellen Anlagen ablaufenden Prozessen, kommen Automatisierungsgeräte bzw. -systeme zum Einsatz, die beispielsweise in Form von insbesondere speicherprogrammierbaren Steuerungen (SPS bzw. englisch PLC für Programmable Logic Controller) vorliegen können.

Im Betrieb werden mittels Feldgeräten erfasste Prozessvariablen zyklisch an die Steuerung übergeben und es wird zyklisch auf den Prozess eingewirkt, indem von der Steuerung ermittelte Stellwerte an Aktoren der Anlage übermittelt werden. Die Stellwerte werden dabei auf Basis bzw. unter Berücksichtigung erfasster Prozessvariablen ermittelt.

Es ist erstrebenswert, die automatisierungstechnische Ausrüstung einer industriellen Anlage in möglichst kurzer Zeit mit hoher Qualität zu planen, zu installieren und in Betrieb setzen zu können. Dabei hat sich eine zumindest teilweise Simulation der automatisierten industriellen Anlage als vorteilig erwiesen.

Im Bereich der Digitalisierung ist der Einsatz von Simulationsmodellen von großer Bedeutung. Der Anmelderin ist bekannt, dass solche mehr und mehr auch in der Betriebsphase des Anlagenlebenszyklus eingesetzt und neue Einsatzzwecke erschlossen werden. So sind beispielsweise die betriebsbegleitende und die vorrausschauende Simulation zur Optimierung oder auch als Assistenzsysteme einsetzbar.

Simulationssysteme erlauben dabei die Modellierung ganzer Prozessanlagen und die dynamische Simulation der Anlage in Echtzeit. Dabei können insbesondere Anlagenmodelle zum Einsatz kommen, die mehrere Teilmodelle umfassen. Das Automatisierungssystem und die Steuerungslogik können beispielsweise mit einer SoftPLC emuliert (beispielsweise nach VDI/VDE 3693), die Funktionsweise der Feldgeräte kann durch Gerätemodelle und das Prozessverhalten durch eine Prozesssimulation simuliert werden. Mit Gerätemodellen werden dabei das Verhalten und die Funktionsweise der echten, realen Feldgeräte nachgebildet.

In der DE 10 2016 222 732 A1 ist ein Verfahren zur Positionsregelung einer Stellgebereinheit in einem Antriebssystem offenbart.

Ein geeignetes Simulationswerkzeug für industrielle Anlagen ist beispielsweise durch "SIMIT: Simulation und virtuelle Inbetriebnahme" der Anmelderin bekannt, die beispielsweise in dem Katalog "Siemens STPCS7T", April 2013, insbesondere Seite 4/2 bis 4/6 sowie in dem Katalog ST PCS 7 T, Ausgabe 2018, mit dem Titel "Prozessleitsystem SIMATIC PCS 7 Band 2: Technologiekomponenten" (https://cache.industry.siemens.com/dl/files/634/109745634/at t_942236/v1/KG_STPCS7T_de.pdf), insbesondere in Kapitel 08 "Simulations- und Trainingssysteme" beschrieben ist.

Für das SIMIT Simulationstool existieren beispielsweise die SITRANS und SIPART Gerätebibliothek, in welcher sowohl generische als auch detaillierte Gerätemodelle enthalten sind. Diese wird von der Anmelderin angeboten, ist beispielsweise abrufbar unter https://support.industry.siemens.com/cs/ww/de/view/109757452. Eine Übersicht der Gerätebibliothek kann der Dokumentation mit dem Titel "SITRANS und SIPART Gerätebibliothek für SIMIT SP" entnommen werden, die ebenfalls auf der genannten Internetseite verfügbar ist. Die Gerätebibliothek ist ferner in dem Artikel "Gerätemodelle in Prozesssimulationen integrieren" von T. Heinzerling, M. Oppelt, T. Bell , ATP Edition Band 59 Nr. 10 (2017), Seite 34 bis 45, https://doi.org/10.17560/atp.v59i10.1894 beschrieben.

Was Simulationen angeht, kann man auch von einem "digitalen Zwilling" der Anlage bzw. bei den Teilmodellen in Form von Gerätemodellen von digitalen Zwillingen der Geräte sprechen.

Grundlage bzw. Voraussetzung dafür, durch Simulationen die vorgenannten Vorteile zu erzielen zu können ist insbesondere eine hinreichend genaue Abbildung des simulierenden Systems (Simulationsmodell der realen Anlage) in einem Simulationswerkzeug und vor allem die Synchronisierung zwischen dem Simulationsmodell und dem realen System bzw. der realen Anlage.

Über einen Rückfluss von Werten aus der realen Anlage in das Simulationsmodel kann versucht werden, eine Angleichung von Simulation und Realität zu erzielen. Ein solcher Abgleich stellt heutzutage jedoch noch einen nicht unerheblichen Aufwand dar und ist, wenn überhaupt, nur schwer, mit viel manuellem Einsatz und unzureichender Genauigkeit zu bewältigen.

Es ist daher Aufgabe der vorliegenden Erfindung, eine Möglichkeit zu schaffen, eine industrielle Anlage möglichst zuverlässig simulieren zu können.

Diese Aufgabe wird gelöst durch ein Verfahren zur Synchronisierung eines der Simulation einer realen industriellen Anlage dienenden Anlagenmodells mit einer realen Anlage, wobei das Verfahren folgende Schritte umfasst:

    a) es wird ein Anlagenmodell bereitgestellt, das wenigstens ein Gerätemodell umfasst, das die Funktion eines realen Gerätes der Anlage simulieren kann bzw. simuliert, wobei das wenigstens eine Gerätemodell dazu eingerichtet ist, unter Verwendung einer oder mehrerer mathematischer Funktionen aus simulierten Eingangswerten, welche reale Eingangswerte für das wenigstens eine reale Gerät repräsentieren, simulierte Ausgangswerte, welche reale Ausgangswerte des wenigstens einen realen Gerätes repräsentieren, und/oder simulierte Zustandswerte, welche reale Zustandswerte der Anlage repräsentieren, zu berechnen, und wobei das wenigstens eine Gerätemodell um eine oder mehrere zu der oder den mathematischen Funktionen inverse mathematische Funktionen erweitert ist,

b) wenigstens ein aus dem Betrieb der realen Anlage stammender realer Ausgangs- und/oder Zustandswert wird bereitgestellt,

c) der wenigstens eine reale Ausgangs- und/oder Zustandswert wird dem erweiterten Gerätemodell zugeführt,

d) mittels der einen oder mehreren inversen mathematischen Funktionen wird aus dem wenigstens einen realen Ausgangs- und/oder Zustandswert wenigstens ein Eingangswert zurückgerechnet,

e) der wenigstens eine zurückgerechnete Eingangswert und/oder wenigstens ein von diesem abgeleiteter Wert wird herangezogen, um das Anlagenmodell mit der realen Anlage zu synchronisieren, und

f) die industrielle Anlage wird unter Berücksichtigung des synchronisierten Anlagenmodells betrieben.

Ein synchronisiertes Anlagenmodell kann beispielsweise zur Erzeugung von bestimmten Sicherungspunkten (sogenannten "Snapshots") dienlich sein. Sicherungspunkte können transferiert und zu einem gegebenen Zeitpunkt in demselben oder einem gleichen System, das sich woanders befindet, geladen werden, beispielsweise, um gewisse Szenarien zu trainieren (OTS) oder alternative Fahrweisen einer Anlage mehrfach zu erproben ("was-wäre-wenn-Analyse") .

Der vorliegenden Erfindung liegt mit anderen Worten die Idee zugrunde, Gerätemodelle eines Simulationsmodells für eine industrielle Anlage derart zu erweitern, dass es möglich wird, auf Basis von realen Prozesswerten, insbesondere eines Automatisierungssystems der Anlage, Eingangswerte, beispielsweise Sensor- und/oder Stellwerte, zurückzurechnen und diese zum Abgleich der simulierten mit der realen Anlage zu verwenden. Dabei wird der Umstand genutzt, dass die bestehenden, nicht erweiterten Gerätemodelle die Funktionsweise, Skalierung, Normalisierung, Filterung usw. und somit den Einfluss der realen Geräte nachbilden. Der Einfluss der Geräte von Eingangswert(en) auf Ausgangs-, bzw. insbesondere im Falle von Aktoren resultierende Zustandswert(e), ist somit bekannt und durch Anwenden einer oder mehrerer inverser Funktionen kann von einem oder mehreren aus der Anlage entnommenen, zu einem bestimmten Anlagenzustand gehörenden Ausgangs- bzw. Zustandswertenwerten auf einen oder mehrere Eingangswerte, etwa Sensor- und/der Stellwerte, zurückgeschlossen werden.

Der bzw. die Eingangswerte können insbesondere unter Kenntnis des Messprinzips zur Bestimmung und der Vorgabe des Zustands des wenigstens einen Gerätes verwendet werden.

Unter Messprinzip ist dabei die Art und Weise der Messung zu verstehen. Beispielsweise kann eine (hydrostatische) Füllstandsmessung (etwa mit einem Manometer) eines eine Anlagenkomponente darstellenden Behälters in Höhe des Behälterbodens erfolgen. Dann kann z.B. ein Sensor über einen Stutzen mit dem Behälter verbunden sein. Der Sensor wandelt den anliegenden Druck, bei dem es sich um einen Absolut- oder Relativ-Druck handeln kann, abhängig von Parametern, wie beispielsweise der Position der Messstelle (Offset) in ein elektrisches Signal. Das elektrische Signal wird durch einen Messumformer abhängig von weiteren Parametern in eine gewünschte Ausgangsgröße, beispielsweise einen Füllstand in Prozent, gewandelt und liegt als analoger Wert im Prozessabbild der Eingänge (PAE) eines insbesondere speicherprogrammierbaren Steuerung als Prozesswert bereit und repräsentiert den (Füll-)Zustand des Behälters zum aktuellen Zeitpunkt.

Bei dem wenigstens einen Gerät kann es sich beispielsweise um eine Anlagenkomponente oder eine Prozesseinheit handeln.

Zweckmäßiger Weise werden in Schritt b) einer oder mehrere reale Ausgangs- bzw. Zustandswerte, der bzw. die an der realen Anlage erfasst wurde bzw. wurden, bereitgestellt.

Es sei angemerkt, dass simulierten Eingangs- bzw. Ausgangs-/Zustandswerte, welche reale Eingangs- bzw. Ausgangs-/Zustandswerte für das wenigstens eine reale Gerät repräsentieren, in an sich bekannter Weise nicht mit realen Ein- bzw. Ausgangs-/Zustandswerten übereinstimmen müssen. Vielmehr können Abweichungen vorliegen, die etwa darin begründet sein können, dass eine hinzunehmende Abweichung zwischen der realen Anlagenkomponente und dem Modell (insbesondere nach VDI/VDE 3693) besteht und der Messwert aus dem Modell mit einem tolerierbaren Fehler behaftet ist. Bei simulierten Eingangs- bzw. Ausgangswerten wird es sich in der Regel zweckmäßiger Weise um Werte handeln, welche gemäß einem gegebenen Simulationsmodell als Platzhalter bzw. Repräsentanten für korrespondierende reale Werte dienen.

Es sei angemerkt, dass die Reihenfolge der Schritte des erfindungsgemäßen Verfahrens, insbesondere der Schritte a) und b) auch anders sein kann, die Schritte a) und b) beispielsweise vertauscht sein können.

Besonders bevorzugt ist vorgesehen, dass eines oder mehrere erweiterte Gerätemodelle im Rahmen der Erfindung verwendet werden, wobei dann die Erweiterung das Zurückrechnen von Ausgangs- bzw. Zustands- zu Eingangswerten ermöglicht. Die Erweiterung ist somit insbesondere durch eine oder mehrere inverse Funktionen gegeben bzw. umfasst solche. Die inverse Funktion ist bzw. die inversen Funktionen sind invers zu der oder den Funktionen des Gerätemodells, also zu der oder den Funktionen, über welche für die Simulation der (vollständigen) Gerätefunktion aus Eingangswerten Ausgangs- bzw. resultierende Zustandswerte berechnet werden können, die jeweils realen Ein- und Ausgangs-/Zustandswerten des realen Gerätes bzw. der realen Anlage entsprechen bzw. zu diesen korrespondieren. Es kann auch vorgesehen sein, dass die Zustände oder Zustandsübergänge von einem oder mehreren Aktoren zu einem Zeitpunkt aus den Eingängen und Ausgängen (PAE und PAA) einer insbesondere speicherprogrammierbaren Steuerung unter Verwendung einer oder mehrerer inverser Funktionen eines erweiterten Aktor-Gerätemodells abgeleitet und einem erweiterten Gerätemodell aufgeprägt werden, um das Gerätemodell zu dem Zeitpunkt zu initialisieren.

Unter einer zu einer Funktion f inversen Funktion $f^{-1}$ ist insbesondere ein Funktion $f^{-1}$ zu verstehen, für die gilt $f * f^{-1} = 1$. Weiterhin kann gelten, dass eine Funktion, die zu einer Funktion $f: A \rightarrow B$, die jedem Element a aus einer Menge A ($a \in A$) ein eindeutig bestimmtes Element b aus der Menge B ($b \in B$) zuordnend, invers ist, durch die Funktion $f^{-1}: B \rightarrow A$ gegeben ist, die jedem Element b aus der Menge B ($b \in B$) ein Element a aus der Menge A ($a \in A$) zuordnet.

Als besonders geeignet hat sich erwiesen, als Ausgangs bzw. Zustandswert(e) zumindest einen Teil des Prozessabbildes der Eingänge (PAE) und/oder zumindest einen Teil des Prozessabbilds der Ausgänge (PAA) einer insbesondere speicherprogrammierbaren Steuerung der realen Anlage bereitzustellen. Wird etwa das Prozessabbild der Eingänge bzw. ein Teil davon, etwa in einem Simulationswerkzeug wie SIMIT bekanntgemacht, können auf die erfindungsgemäße Weise Eingangs-, etwa Sensorwerte eines oder mehrerer Messumformer und/oder Stellwerte eines oder mehrerer Aktoren der Anlage, zurückgerechnet werden.

Durch die vorliegende Erfindung wird ein Abgleich einer simulierten mit einer realen Anlage in einem gegebenen Betriebszustand erstmals detailgetreu und mit vertretbarem Aufwand möglich. Gegenüber einem manuellen Abgleich wird der Aufwand erheblich reduziert. Da ein detailgetreuer, zutreffender Abgleich mit vertretbarem Aufwand möglich ist, können Simulationsmodelle der Anlagensimulation aus zum Beispiel virtueller Inbetriebnahme oder einem Operator-Training-Systems auch zur betriebsparallelen Simulation weiterverwendet und mit dem Zustand der realen Anlage initialisiert werden.

In der Regel umfasst eine industrielle Anlage eine Vielzahl von Geräten, etwa eine Vielzahl von Sensoren und/oder Aktoren und/oder Messumformern. Ein zugehöriges Anlagenmodell, welches der Simulation der Anlage und deren Betrieb dient, kann dann auch mehrere Gerätemodelle umfassen. Dann können selbstverständlich für mehrere, besonders bevorzugt alle Gerätemodelle reale Ausgangs- bzw. Zustandswerte bereitgestellt und diese unter Rückgriff auf inverse Funktionen zurückgerechnet und die zurückgerechneten Werte zum Abgleich verwendet werden.

Entsprechend kann in Weiterbildung der erfindungsgemäßen Verfahrens vorgesehen sein, dass die Anlage mehrere Geräte umfasst und

- in Schritt a) ein Anlagenmodell bereitgestellt wird, welches für mehrere, insbesondere alle realen Geräte der Anlage jeweils ein Gerätemodell umfasst, das die Funktion des jeweiligen realen Gerätes der Anlage simulieren kann bzw. simuliert, wobei das jeweilige Gerätemodell dazu eingerichtet ist, unter Verwendung einer oder mehrerer mathematischer Funktionen aus simulierten Eingangswerten, welche reale Eingangswerte für das wenigstens eine reale Gerät repräsentieren, simulierte Ausgangswerte, welche reale Ausgangswerte des wenigstens einen realen Gerätes repräsentieren, und/oder simulierte Zustandswerte, welche reale Zustandswerte der Anlage repräsentieren, zu berechnen, und wobei das jeweilige Gerätemodell um eine oder mehrere zu der oder den Funktionen des jeweiligen Gerätemodells inverse mathematische Funktionen erweitert ist, und
- in Schritt b) für wenigstens zwei Geräte jeweils wenigstens ein aus dem Betrieb der realen Anlage stammender realer Ausgangs- und/oder Zustandswert bereitgestellt wird, und
- in Schritt c) der jeweilige wenigstens eine reale Ausgangs- und/oder Zustandswert dem jeweiligen erweiterten Gerätemodell zugeführt wird,
- in Schritt d) mittels der einen oder mehreren inversen mathematischen Funktionen des jeweiligen erweiterten Gerätemodells aus dem jeweiligen wenigstens einen realen Ausgangs- und/oder Zustandswert wenigstens ein zurückgerechneter Eingangswert berechnet wird,
- in Schritt e) zurückgerechneten Eingangswerte und/oder von diesen abgeleitete Werte herangezogen werden, um das Anlagenmodell mit der realen Anlage zu synchronisieren.

In Weiterbildung kann vorgesehen sein, dass wenigstens ein erweitertes Gerätemodell durch ein Messumformer-Gerätemodell gegeben ist, das dazu eingerichtet ist, die Funktion eines Messumformers der realen Anlage, der insbesondere reale Eingangswerte zu realen Ausgangswerten verarbeitet, zu simulieren, gegeben ist oder ein solches umfasst.

Die eine oder mehreren inversen Funktionen stellen dann insbesondere eine Erweiterung des wenigstens einen Messumformer-Gerätemodells dar bzw. sind Teil einer Erweiterung dieses.

Auch kann vorgesehen sein, dass wenigstens ein Messumformer-Gerätemodell eine oder mehrere mathematische Funktionen umfasst, mittels derer aus wenigstens einem eine Messumformer-Eingangswert darstellenden simulierten Sensorwert, der einen realen Sensorwert eines realen Sensors der realen Anlage repräsentiert, wenigstens einen simulierten Messumformer-Ausgangswert, der einen realen Messumformer-Ausgangswert der realen Anlage repräsentiert, berechnet werden bzw. werden können.

Ausgangswerte von Messumformern können beispielsweise durch Prozesswerte gegeben sein. Bei Prozesswerten handelt es sich bevorzugt um zumindest einen Teil des Prozessabbilds der Eingänge (PAE) insbesondere einer realen (speicherprogrammierbaren) Steuerung der realen Anlage. Der Einfluss eines Messumformers von Sensor (Eingang des Messumformers) auf Prozesswert (Ausgang des Messumformers, insbesondere PAE) ist mit dem Modell bekannt und über erfindungsgemäße Invertierung bzw. Rückrechnung unter Verwendung zugehöriger inverser Funktionen kann aus einem Prozessabbild der Eingänge einer realen Anlage, welches insbesondere dem realen Ausgang eines realen Messumformers der realen Anlage entspricht, auf Sensorwerte zurückgerechnet werden.

Ist wenigsten ein erweitertes Gerätemodell ein erweitertes Messumformer-Gerätemodell und wird einer oder werden mehrere Sensorwerte mit diesem zurückgerechnet, wird dieser bzw. werden diese bevorzugt für die Synchronisierung dem Anlagenmodell zugeführt.

Das Prinzip des Rückrechnens kann natürlich nicht nur für Messumformer von Sensoren, sondern auch für andere Geräte/Komponenten und zugehörige Ein- und Ausgangswerte zum Einsatz kommen. Als weiteres Beispiel seien Aktoren genannt.

Es kann entsprechend vorgesehen sein, dass wenigstens ein erweitertes Gerätemodell durch ein Aktor-Gerätemodell, das dazu eingerichtet ist, die Funktion eines Aktors der realen Anlage zu simulieren, gegeben ist oder ein solches umfasst. Das wenigstens eine Aktor-Gerätemodell umfasst bevorzugt eine oder mehrere mathematische Funktionen, mittels derer aus wenigstens einem simulierten Aktor-Eingangswert, der einen realen Aktor-Eingangswert, insbesondere wenigstens einen Wert des Prozessabbildes der Ausgänge einer bevorzugt speicherprogrammierbaren Steuerung der Anlage repräsentiert, wenigstens einen Zustandswert, der einen realen Zustandswert der realen Anlage repräsentiert, berechnet wird bzw. werden kann.

Ein erfindungsgemäß erweitertes Aktor-Gerätemodell umfasst dann eine oder mehrere zu dieser/diesen mathematischen Funktionen inverse mathematische Funktion(en).

Über die eine oder mehreren inverse(n) Funktion(en) kann dann aus realen Zustandswerten auf Eingangswerte darstellende Stellwerte zurückgerechnet werden und diese können zur Synchronisierung von Modell und realer Anlage verwendet werden.

Umfasst das bereitgestellte Anlagenmodell wenigstens ein Aktor-Gerätemodell, kann weiterhin vorgesehen sein, dass in Schritt b) wenigstens ein Wert des Prozessabbildes der Ausgänge einer realen insbesondere speicherprogrammierbaren Steuerung der realen Anlage und wenigstens ein Wert des Prozessabbildes der Eingänge einer realen insbesondere speicherprogrammierbaren Steuerung der realen Anlage bereitgestellt wird, und bevorzugt in Schritt d) mit der oder den inversen mathematischen Funktionen des erweiterten Aktor-Gerätemodells aus dem wenigstens einen Wert des Prozessabbildes der Ausgänge wenigstens ein Aktor-Eingangswert zurückgerechnet und bevorzugt mit dem wenigstens einen Wert des Prozessabbilds der Eingänge der realen insbesondere speicherprogrammierbaren Steuerung der realen Anlage verglichen wird. Besonders bevorzugt kann dann für den Fall, dass eine Abweichung besteht, eine Übereinstimmung herbeigeführt werden, um eine Synchronisierung zu erzielen.

Ein Aktor einer Anlage kann beispielsweise in Form eines Ventils oder einer Pumpen gegeben sein. Bei einem Eingangswert kann es sich beispielsweise um einen Stellwert handeln, der insbesondere einen Teil des Prozessabbilds der Ausgänge einer (speicherprogrammierbaren) Steuerung darstellen kann. Bei einem Aktor handelt es sich bevorzugt um einen solchen mit Feedback, der insbesondere Rückmeldung über einen infolge von wenigstens einem Empfangenen Stellwerte erreichten Ist-Zustand geben kann bzw. gibt. Einer bzw. mehrere zurückgemeldete Werte, die Zustandswerte darstellen, bilden dann insbesondere einen Teil des Prozessabbildes der Eingänge (PAE) einer bevorzugt speicherprogrammierbaren Steuerung der Anlage. Ein zugehöriges Aktor-Gerätemodell ist dann entsprechend ausgebildet bzw. eingerichtet.

Vor allem in demjenigen Falle, dass in Schritt a) ein Anlagenmodell mit wenigstens einem Aktor-Gerätemodell bereitgestellt wird, wird in Schritt b) bevorzugt zumindest ein Teil des Prozessabbild der Eingänge (PAE) und zumindest ein Teil des Prozessabbilds der Ausgänge (PAA) einer realen insbesondere speicherprogrammierbaren Steuerung der realen Anlage bereitgestellt. Aktoren und zugehörige Aktor-Gerätemodelle bilden in der Regel die Funktionalität insbesondere zur Ansteuerung und Überwachung in einem Zustandsautomaten ab. Befindet sich eine Anlagenkomponente in einem Zustand, wie Beispielsweise "Pumpe aus", oder in einem Zustandsübergang, wie beispielsweise "Pumpe bzw. Motor startet", kann aus der Kombination aus dem Kommando (PAA) und der Rückmeldung (PAE) der Zustandsübergang mit dem gezielten Zustand, beispielsweise "die Pumpe soll mit einer bestimmten Leistung fördern" oder "die Pumpe bzw. der Motor soll mit einer bestimmten Drehzahl und in einer bestimmten Richtung (vorwärts) laufen" abgeleitet werden und die Synchronisation der Simulation kann unter Berücksichtigung davon erfolgen.

Für den Fall, dass sich die reale Anlage bzw. deren Anlagenkomponenten zum Zeitpunkt eines Abgleiches in einem stationären Zustand befinden, ist der Abgleich gemäß der vorliegenden Erfindung auf besonders einfache Weise durch Bereitstellung eines oder mehrerer Ausgangswerte, insbesondere Prozesswerte des PAE einer Steuerung, möglich. Im Falle einer nicht stationären Anlagenphase kann auf Sequenzen, insbesondere von Ausgangswerten, zurückgegriffen werden, über welche eine zeitliche Veränderung bzw. Entwicklung erkenn- und berücksichtigbar wird.

Eine vorteilhafte Ausführungsform des erfindungsgemäßen Verfahrens zeichnet sich entsprechend dadurch aus, dass in Schritt b) mehrere reale Ausgangswerte bereitgestellt werden, wobei insbesondere wenigstens eine Sequenz von mehreren, an aufeinanderfolgenden Zeitpunkten erfassten realen Ausgangswerten bereitgestellt wird.

Wenn eine Synchronisierung zu einem Zeitpunkt erfolgen soll, zu dem sich eine Anlage in einem nicht stationären Zustand befindet, ist auch der Rückgriff auf wenigstens ein erweitertes Aktor-Gerätemodell besonders geeignet, da aus dem Vergleich von Soll zu Ist (PPA zu PAE) ein transienter Zustand abgeleitet werden kann.

Eine weitere Ausführungsform zeichnet sich dadurch aus, dass unter Verwendung wenigstens einer Zuordnungstabelle und/oder Kennlinie dem in Schritt d) berechneten wenigstens einen zurückgerechneten Eingangswert wenigstens ein Korrespondenzwert zugeordnet und der wenigstens eine Korrespondenzwert in Schritt e) als abgeleiteter Wert herangezogen wird. Unter Rückgriff auf eine oder mehrere Zuordnungstabellen und/oder eine oder mehrere Kennlinien können die spezifischen Einflüsse der Simulationskomponenten des Messprinzips berücksichtigt bzw. bestimmt werden.

Die Übernahme eines oder mehrerer zurückgerechneter Eingangswerte und/oder von diesen abgeleiteter Werte, kann beispielsweise durch ein einfaches Scripting in einem bestehenden Simulationstool, beispielsweise SIMIT, realisiert werden. Weiterhin kann vorgesehen sein, dass die Zeitkonstanten (Gedächtnis) der Gerätemodelle zur schnellen Übernahme von Werten zu Null gesetzt und - beispielsweise im Falle einer Was-Wäre-Wenn-Analyse zurück auf ihren eigentlichen Wert gesetzt werden. Filterkonstanten können eine Signal-Glättung von Eingangs-, beispielsweise Sensorwerten bewirken. Das kann bedeuten, dass das Ausgangssignal dem Eingangssignal um eine gewisse zeitliche Verzögerung folgt. Wird die Filterkonstante auf null gesetzt, bedeutet dies, dass das Ausgangssignal dem Eingangssignal ohne Verzögerung folgt.

Gegenstand der Erfindung ist ferner eine Vorrichtung, die zur Durchführung des erfindungsgemäßen Verfahrens zur Synchronisierung bzw. des erfindungsgemäßen Verfahrens zum Betreiben einer industriellen Anlage ausgebildet und eingerichtet ist.

Die Vorrichtung kann insbesondere wenigstens eine Recheneinrichtung, etwa einen PC, umfassen oder durch eine solche gegeben sein. Ist wenigstens eine Recheneinrichtung vorhanden, weist diese bevorzugt wenigstens einen Prozessor auf und/oder Arbeitsspeicher und/oder Datenspeicher auf. Ein Anlagenmodell mit wenigstens einem erweiterten Gerätemodell kann dann auf einer Recheneinrichtung der erfindungsgemäßen Vorrichtung bereitgestellt sein. Die erfindungsgemäße Vorrichtung kann auch einen Teil der zu simulierenden industriellen Anlage bzw. einen Teil eines Automatisierungssystems einer solchen bilden. Um den wenigstens einen aus dem Betrieb der realen Anlage stammenden realen Ausgangswert des wenigstens einen realen Gerätes bereitzustellen, kann die erfindungsgemäße Vorrichtung oder zumindest ein Teil dieser mit eines Steuerungssystems, etwa einer speicherprogrammierbaren Steuerung einer zu simulierenden Anlage via Kabel und/oder kabellos verbunden sein. Für die Verbindung kann die erfindungsgemäße Vorrichtung eine oder mehrere Schnittstellen aufweisen. Auch ist es möglich, dass die erfindungsgemäße Vorrichtung in ein Steuersystem, etwa eine speicherprogrammierbare Steuerung einer industriellen Anlage integriert ist bzw. durch eine solche gebildet wird. Ist die Vorrichtung separat zu einer insbesondere speicherprogrammierbaren Steuerung ausgebildet, weist die Steuerung bevorzugt eine geeignete Schnittstelle auf, über welche wenigstens ein realer Ausgangs- bzw. Zustandswert, insbesondere wenigstens ein Wert des PAE und/oder PAA entnommen und der separaten Vorrichtung zugeführt werden kann. Bei einer solchen Schnittstelle kann es sich z.B. um eine Ethernet-Schnittstelle mit offenem/standardisiertem (OPC UA) OPC-Protokoll handeln.

Weiterhin betrifft die Erfindung ein Computerprogrammprodukt, das Programmcodemittel zur Durchführung der Schritte des erfindungsgemäßen Verfahrens zur Synchronisierung bzw. des erfindungsgemäßen Verfahrens zum Betreiben einer industriellen Anlage umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Synchronisierung bzw. des erfindungsgemäßen Verfahrens zum Betreiben einer industriellen Anlage durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile werden anhand der nachfolgenden Beschreibung eines Ausführungsbeispiels der Erfindung unter Bezugnahme auf die beiliegende Zeichnung deutlich. Darin ist

Figur 1 ein Ausführungsbeispiel eines erfindungsgemäßen Verfahrens zum Betreiben einer industriellen realen Anlage;

Figur 2 Komponenten einer industriellen Anlage zusammen mit korrespondierenden Teilmodellen eines zugehörigen Anlagenmodells in rein schematischer Darstellung;

Figur 3 die Komponenten und Modelle aus Figur 2, wobei das Messumformer-Gerätemodell durch ein erfindungsgemäß erweitertes Messumformer-Gerätemodell gegeben ist;

Figur 4 Komponenten einer industriellen Anlage zusammen mit korrespondierenden Teilmodellen eines zugehörigen Anlagenmodells in rein schematischer Darstellung; und

Figur 5 die Komponenten und Modelle aus Figur 4, wobei das Aktor-Gerätemodell durch ein erfindungsgemäß erweitertes Aktor-Gerätemodell gegeben ist.

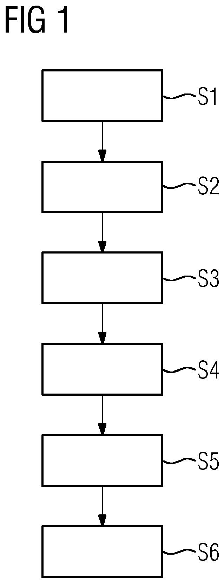

Die Figur 1 zeigt die Schritte eines Ausführungsbeispiels eines erfindungsgemäßen Verfahrens zum Betreiben einer realen industriellen Anlage. Dies umfasst die Schritte eines Ausführungsbeispiels eines erfindungsgemäßen Verfahrens zur Synchronisierung eines der Simulation der realen industriellen Anlage dienenden Anlagenmodells mit der realen Anlage, konkret die Schritte S1 bis S6.

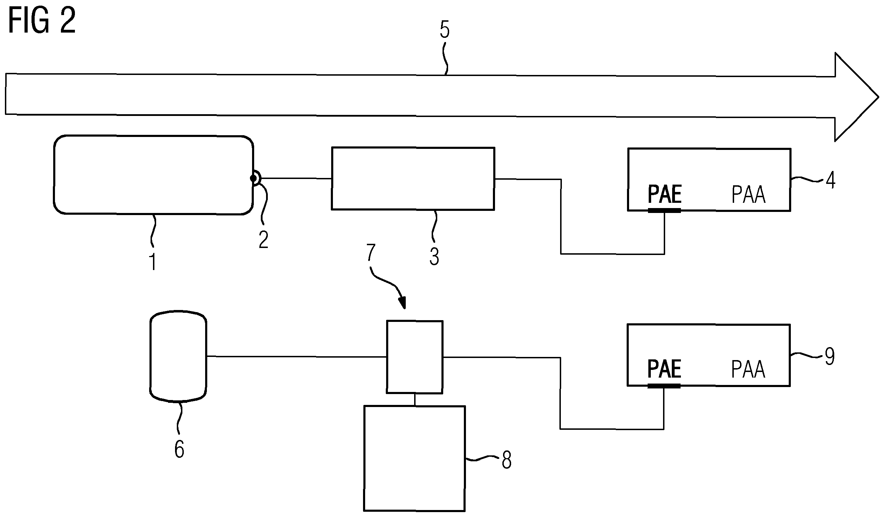

Teile der realen industriellen Anlage sind rein schematisch in Figur 2 dargestellt. Vorliegend handelt es sich um eine verfahrenstechnische Anlage für Forschungszwecke. Dies ist nicht einschränkend zu verstehen. Vielmehr kann ein erfindungsgemäßes Verfahren zur Synchronisierung und ein erfindungsgemäßes Verfahren zum Betreiben einer Anlage selbstverständlich auch für beliebige andere Anlagen, die anderen Zwecken dienen, durchgeführt werden.

Vorliegend umfasst die Anlage einen Reaktor Tank 1, an dem ein Sensor 2 angeordnet ist, um den aktuellen Füllstand in dem Tank 1 zu messen, ein Feldgerät in Form eines Messumformers 3, welcher mit dem Sensor 2 verbunden ist und im Betrieb von dem Sensor 2 erfasste Sensorwerte übergeben bekommen kann bzw. bekommt und aus diesen Prozesswerte ermitteln kann bzw. ermittelt, sowie eine speicherprogrammierbare Steuerung (SPS) 4, die mit dem Messumformer 3 verbunden ist und von diesem im Betrieb zyklisch Prozesswerte, welche der der Messumformer 3 aus erhaltenen Sensorwerten ermittelt hat, erhalten kann bzw. erhält. Der Messumformer 3 glättet Sensorwerte und führt eine Vorverarbeitung durch, bringt diese insbesondere in eine Form, welche die SPS 4 "lesen" bzw. weiterverarbeiten kann. Die von dem Sensor 2 erhaltenen Sensorwerte stellen Eingangswerte des Messumformers 3 dar und die verarbeiteten Sensorwerte, die als Prozesswerte bezeichnet werden können, sind Ausgangswerte von diesem.

Prozesswerte, welche die SPS 4 von dem Messumformer 3 erhalten hat, bilden einen Teil des sogenannten Prozessabbildes der Eingänge (PAE).

Über einen Pfeil 5 ist in der Figur 2 der Weg bzw. die Richtung von der Anlagenkomponente, also dem Reaktor Tank 1, über den Sensor 2, den Messumformer 3 zum Automatisierungssystem, insbesondere der SPS 4 angedeutet.

Bei dem Messumformer 3 handelt es sich vorliegend um einen SITRANS P DS III PA, welcher von der Anmelderin vertrieben wird. Selbstverständlich können andere Messumformer gleichermaßen zum Einsatz kommen. Bei dem Sensor 2 handelt es sich um einen in den Messumformer integrierten Sensor.

Alternativ dazu, dass ein Feldgerät mit PROFIBUS PA verwendet wird, kann natürlich auch eines mit einem anderen Kommunikationsstandard, beispielsweise HART zum Einsatz kommen.

Es sei angemerkt, dass die Anlage neben den in Figur 2 dargestellten Komponenten noch eine Vielzahl weiterer Komponenten umfasst, u.a. weitere Sensoren 2 und Messumformer 3 sowie ebenfalls mit der SPS 4 verbundene Aktoren, über welche auf den Prozess eingewirkt werden kann.

Im Betrieb werden mittels der Sensoren 2 der Anlage erfasste Prozessvariablen zyklisch an die SPS 4 übergeben und es wird zyklisch auf den Prozess eingewirkt, indem von der SPS 4 ermittelte Stellwerte an Aktoren der Anlage übermittelt werden. Die Stellwerte werden dabei auf Basis bzw. unter Berücksichtigung erfasster Prozessvariablen ermittelt.

Vorliegend werden die Anlage und deren Betrieb simuliert. Hierfür kommt ein Anlagenmodell zum Einsatz, welches unter Verwendung von dem Simulationswerkzeug "SIMIT SP V9.1" der Anmelderin erstellt wurde. Das Anlagemodell umfasst mehrere Teilmodelle, konkret eine Prozesssimulation 6 für den im Speicher oder Reaktor Tank 1 ablaufenden Prozess ein generisches Gerätemodell 7, welches die Schnittstelle zum Sensor 2 abbildet, ein detailliertes Gerätemodell 8 für den Messumformer 3 und eine Emulation für die SPS 4, welche vorliegend durch eine SoftSPS 9 gegeben ist.

Generische Gerätemodelle aus der SIMIT-Gerätebibliothek enthalten Grundfunktionen insbesondere von Aktoren und Sensoren, die nicht typspezifisch sind und für die meisten Feldgeräte verwendet werden können. Die detaillierten Gerätemodelle sind spezifisch für die Simulation von bestimmten Geräten entwickelt worden. Die detaillierten Gerätemodelle erweitern die generischen Modelle um spezielle Funktionen und sind mit diesen zusammen zu verwenden. Die generischen und detaillierten Modelle werden über eine spezielle Schnittstelle miteinander verbunden.

Die Gerätemodelle umfassen - in an sich bekannter Weise - jeweils eine oder mehrere mathematische Funktionen, über die die Funktion bzw. der Einfluss des jeweiligen Gerätes abbilden. Was das Messumformer-Gerätemodell 8 angeht, sind konkret eine oder mehrere mathematische Funktionen vorgesehen, über welche aus simulierten Eingangswerten, die im Falle des Messumformer-Modells 8 durch simulierte Sensorwerte gegeben sind, simulierte Ausgangswerte, die im Falle des Messumformer-Modells 8 durch an die SoftSPS 9 zu übergebende simulierte Prozesswerte gegeben sind, berechnet werden können. Die an die Soft-SPS 9 zu übergebenden simulierten Prozesswerte stellen einen Teil des simulierten PAE dar. Über die eine oder mehreren mathematischen Funktionen des Messumformer-Gerätemodells 8 werden die Funktionsweise, Skalierung, Normalisierung, Filterung, usw., konkret der komplette Einfluss des Gerätes abgebildet.

Die simulierten Sensorwerte korrespondieren zu realen Sensorwerten des realen Sensors 2 bzw. repräsentieren diese und die simulierten Ausgangs-, also Prozesswerte, korrespondieren zu realen Ausgangs-/Prozesswerten des realen Messumformers 3, welche einen Teil des realen PAE bilden.

In der Figur 2 sind die jeweils zu den dargestellten Komponenten 1, 2, 3, 4 der Anlage gehörigen Modelle 6, 7, 8, 9 darunter, durch die Modelle rein schematisch repräsentierende Bildelemente dargestellt.

Sind die Komponenten und Prozesse einer Anlage bekannt, kann unter Verwendung eines Simulationswerkzeuges wie SIMIT ein zugehöriges Anlagenmodell erstellt werden.

Eine Herausforderung besteht jedoch darin, das Anlagenmodell mit einer realen Anlage, die sich in einem gegebenen Betriebszustand befindet, abzugleichen.

Hierfür wird mit der vorliegenden Erfindung eine Möglichkeit geschaffen.

Konkret wird in einem ersten Schritt S1 (vgl. Figur 1) ein Anlagenmodell bereitgestellt, welches ein zu dem Messumformer 3 gehörendes detailliertes Gerätemodell 10 umfasst, dass erweitert ist. Die Erweiterung 11 des Modells 10 ist dabei durch eine oder mehrere mathematische Funktionen gegeben, die zu der bzw. den mathematischen Funktionen des detaillieren Gerätemodells 8 für den Messumformer 3 invers sind. Unter einer Funktion, die zu einer Funktion f: A → B, die jedem a ∈ A ein eindeutig bestimmtes b ∈ B zuordnend, invers ist, ist dabei die Funktion $f^{-1}$: B → A zu verstehen, die jedem b ∈ B ein a E A zuordnet.

Das Anlagenmodell mit dem erweiterten Gerätemodell 10 wird vorliegend auf einem in den Figuren nicht dargestellten PC oder auf einem ESX Server System bereitgestellt, der oder das mit der realen SPS 4 via ebenfalls nicht dargestellter Kabel verbunden ist.

In einem Schritt S2 wird ein realer Ausgangswert des realen Messumformers 3, welcher von dem realen Messumformer 3 an die reale SPS 4 übergeben wurde und einen Prozesswerte und Teil des realen PAE der realen SPS 4 bildet, bereitgestellt.

Bei dem Ausgangswert kann es sich beispielsweise um einen Füllstand und/oder einen Druck und/oder einen Volumen- und/oder Durchflussmessungs-Wert oder einen Wert, der einen solche repräsentiert, handeln.

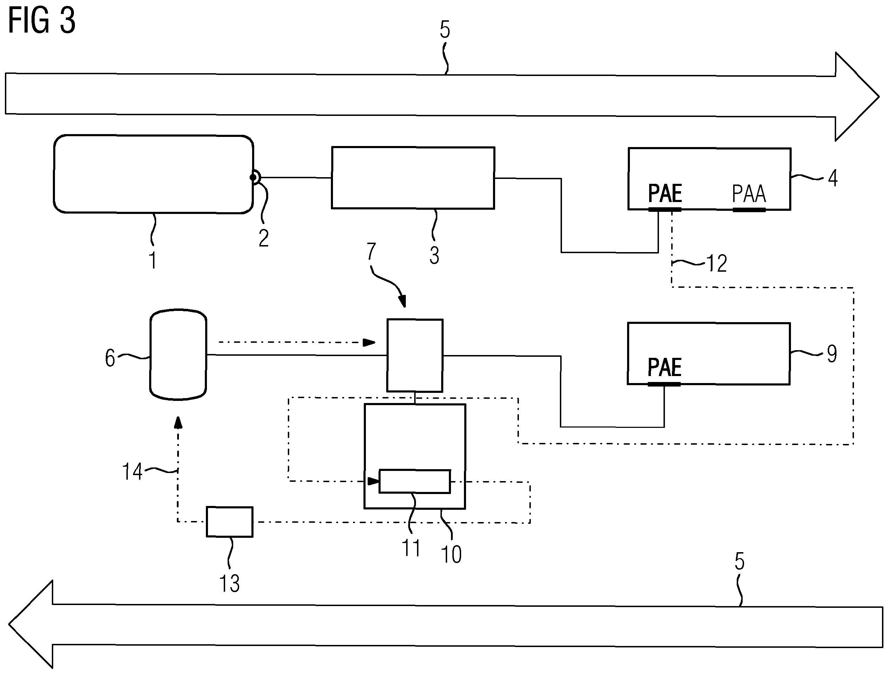

In einem Schritt S3 wird der reale Prozesswert dem erweiterten Gerätemodell 10 zugeführt. Konkret wird der reale Ausgangswert von der SPS 4 an den PC mit dem Anlagenmodell übermittelt. In der Figur 3 ist dies durch einen strichpunktierten Pfeil 12 angedeutet, der von dem PAE der realen SPS 4 zu dem erweiterten Gerätemodell 10 weist. Dieser Vorgang bzw. diese Funktion kann auch als "PAE REFEED" oder "PAE Rückspeisung" bezeichnet werden.

In einem Schritt S4 berechnet das erweiterte Gerätemodell 10 aus dem realen Prozesswert einen zurückgerechneten Eingangswert, konkret einen zurückgerechneten Sensorwert. Die Berechnung erfolgt unter Rückgriff auf die eine oder mehreren inversen mathematischen Funktionen, die eine Erweiterung 11 des Gerätemodells 10 bilden.

Gilt beispielsweise, dass über (wenigstens) eine Funktion f eines Geräte-Modells aus einem Eingangswert InPV ein beispielsweise analoger Prozesswert PV_analog über

$$PV\_analog = InPV * f$$

berechnet werden kann, dann kann über

$$InPV = PV\_analog * f^{-1}$$

aus einem realen Prozesswert PV_analog ein Eingangswert zurückgerechnet werden.

In Schritt S5 wird dem zurückgerechnete Eingangswert, bei dem es sich vorliegend um einen Sensorwert handelt, unter Verwendung einer Zuordnungstabelle ein Korrespondenzwert zugeordnet. Je nach Anlagenkomponente und Messprinzip, beispielsweise bei einem Behälter und einer druckbasierten Füllstandsmessung, entspricht der Sensorwert einer physikalischen Größe (etwa in mbar), welche ggf. nicht direkt dem Komponentenmodell aufgeprägt werden kann. Der Zustand des Komponentenmodells kann beispielsweise über einen Parameter Füllstand in Meter gesetzt werden. Über eine Zuordnungstabelle können spezifischen Einflüsse der Simulationskomponenten des Messprinzips berücksichtigt bzw. bestimmt werden. Alternativ oder zusätzlich zu einer Zuordnungstabelle kann auch auf wenigstens eine Kennlinie zugegriffen werden.

In der Figur 3 ist der Vorgang der Zuordnung eines Korrespondenzwertes durch einen mit dem Bezugszeichen 13 versehenes Blockelement angedeutet. Das Blockelement 13 liegt auf einem strichpunktierten Pfeil 14, welcher von dem erweiterten Gerätemodell 10 zu der Prozesssimulation 6 zeigt und die entsprechende Übergabe des Sensorwertes bzw. dem zugeordneten Korrespondenzwert andeutet.

In Schritt S6 wird der unter Rückgriff auf die Zuordnungstabelle erhaltene Korrespondenzwert dem Anlagenmodell zu dessen Synchronisierung mit der realen Anlage zugeführt.

Die zu der konventionellen Vorgehensweise umgekehrte Richtung vom Automatisierungssystem, also der SPS 4 über die Gerätemodelle 7, 10 zur simulierten Anlagenkomponente ist in der Figur 3 durch einen weiteren, in der Figur ganz unten eingezeichneten Pfeil 5 angedeutet.

Im Anschluss an die Synchronisierung werden dem Gerätemodell 7 von der Prozesssimulation 6 simulierte Werte übergeben, was in der Figur 3 durch einen strichpunktierten Pfeil angedeutet ist, der von der Prozesssimulation 6 zum Modell 7 zeigt.

Das Anlagenmodell umfasst neben dem in Figur 3 gezeigten Sensor 2 und Messumformer 3 noch weitere Geräte und das zugehörige Modell weist für die weiteren realen Geräte noch weitere Gerätemodelle auf, die eine oder mehrere mathematische Funktionen umfassen, über die der komplette Geräteeinfluss berechenbar ist, und die ebenfalls um eine oder mehrere inverse mathematische Funktionen erweiterte sein können bzw. sind.

Die vorstehend im Zusammenhang mit dem Messumformer 3 und zugehörigen erweiterten Modell 10 beschriebenen Schritte können dann gleichermaßen für eines oder mehrere weitere, besonders bevorzugt alle Geräte der Anlage durchgeführt werden und sämtliche zurückgerechneten Eingangswerte können für die Synchronisierung herangezogen werden.

Dabei ist die erfindungsgemäße Vorgehensweise keinesfalls auf Sensoren bzw. zu Sensoren gehörende Messumformer beschränkt. Vielmehr kann dieses auch für andere Geräte, etwa Aktoren oder Durchflussmessgeräte zum Einsatz kommen.

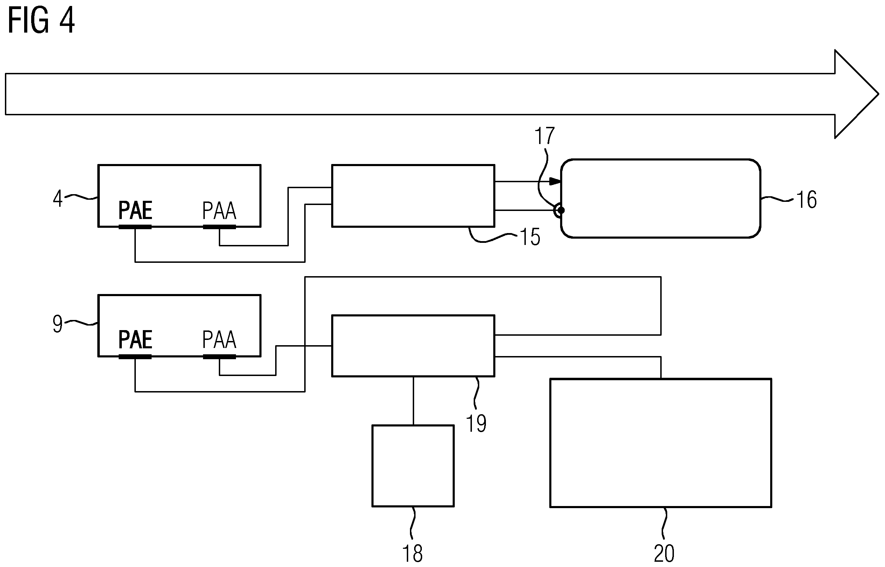

In der Figur 4 ist - rein schematisch - ein mit der SPS 4 der Anlage verbundener Aktor 15 gezeigt, der wiederum mit einem einen Antrieb umfassenden Ventil 16 der Anlage verbunden ist.

Im Betrieb erhält der Aktor 15 von der SPS 4 zyklisch Eingangswerte für den Aktor 15 darstellende Stellwerte, welche einen Teil des Prozessabbilds der Ausgänge PAA der SPS 4 bilden. Diese Werte stellen Soll-Werte dar. Der Aktor 15 wirkt gemäß den Stellwerten auf den Prozess, vorliegend das Ventil 16 ein. Diese Vorgänge sind in der Figur 6 über einen Pfeil angedeutet, der vom PAA der SPS 4 über den Aktor 15 bis zu dem Ventil 16 weist.

Bei dem Aktor 15 handelt es sich um einen solchen mit Feedback. Der Aktor 15 erfasst entsprechend die resultierenden Ist- Werte, die sich infolge der Stellwerte ergeben, was beispielsweise mittels einer geeigneten Sensorik möglich ist, und diese werden an die SPS 4 übermittelt. In der Figur 4 ist diese Rückführung der Ist-Werte durch eine Linie angedeutet, welche ein mit dem Bezugszeichen 17 versehenen Erfassungspunkt an dem Ventil 16 mit dem Aktor 15 und dem PAE der SPS 4 verbindet. Bei den resultierenden Ist-Werten kann es sich beispielsweise um Positionen des Ventils 16 handeln. Die resultierenden Ist-Werte werden auch zyklisch an die SPS 4 übergeben und bilden einen Teil des Prozessabbildes der Eingänge PAE dieser. Die Ist-Werte stellen Zustandswerte dar, die aus den Stellwerten resultieren.

Für die Simulation des Aktors 15 kann das Anlagenmodell ein Aktor-Gerätemodell 18 für den Stellungsregler umfassen, welches beispielsweise durch ein detailliertes Gerätemodell aus der SIMIT-Gerätebibliothek vorliegen kann. Bei dem hier beschriebenen Ausführungsbeispiel ist konkret das Stellungsregler-Modell mit der Bezeichnung "Sipart PS2" (korrespondierend zum Aktor 15) aus der "SITRANS und SIPART Gerätebibliothek für SIMIT SP" vorgesehen, wobei dies nicht einschränkend zu verstehend ist. Es kann ferner für den Positioner des Aktors 15 ein generisches Gerätemodell 19 vorgesehen sein, welches die Schnittstelle des Aktors 15 abbildet.

Die beiden Gerätemodelle 18, 19 sind - in Analogie zu der Figur 2 - in der Figur 4 unterhalb der korrespondierenden Komponenten der realen Anlage, ebenfalls rein schematisch, dargestellt. Neben den beiden Gerätemodellen 18, 19 ist auch die SoftSPS 9 des Anlagenmodells und eine zu dem Ventil 16 gehörende Prozesssimulation 20 gezeigt.

Im Rahmen der Simulation werden dem Aktor-Gerätemodell 18 von der SoftSPS 9 zyklisch simulierte Stellwerten übergeben und das Aktor-Gerätemodell 18 umfasst eine oder mehrere mathematische Funktionen, mittels derer aus den übergebenen simulierten Stellwerten Zustandswerte berechnet werden können, welche Ist-Werte des Ventils 16 bzw. dessen Antriebs/Motors repräsentieren. Die simulierten Stellwerte repräsentieren reale Stellwerte der realen SPS 4, die Eingangswerte des realen Aktors 15 darstellen.

Im Falle eines Komponenten-Modells eines Ventils 16 wird die Ventilposition als prozentualer Wert von 0 bis 100 mittels Geräte-Modell 18, 19 dem Ventil-Modell 20 vorgegeben und die Ventilstellung wird über eine Ventilkennlinie auf einen Ventilkennwert abgebildet.

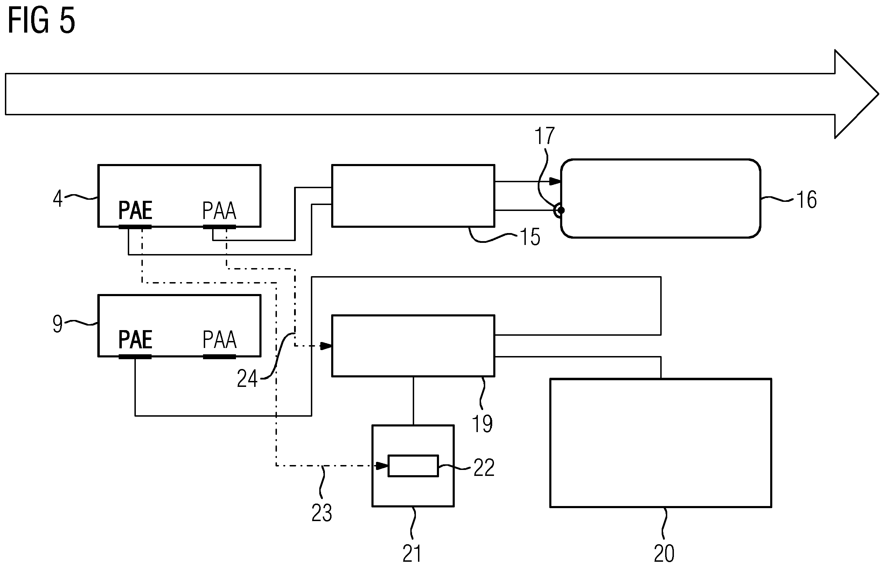

Gemäß der vorliegenden Erfindung wird in Schritt S1 ein Anlagemodell bereitgestellt, welches anstelle eines konventionellen Aktor-Gerätemodells 18 ein erweitertes Aktor-Gerätemodell 21 umfasst (vgl. Figur 5). Die Erweiterung 22 ist dabei - in Analogie zu dem erweiterten Messumformer-Gerätemodell 10 - durch eine oder mehrere inverse mathematische Funktionen gegeben, die zu der bzw. den mathematischen Funktionen des konventionellen Aktor-Gerätemodells 18 invers sind.

In Schritt S2 wird wenigstens ein Wert des Prozessabbildes der Ausgänge PAA der realen SPS 4 der realen Anlage, vorliegend wenigstens ein Stellwert als realer Aktor-Eingangswert und wenigstens ein Wert des Prozessabbildes der Eingänge PAE der realen SPS 4, vorliegend wenigstens ein zu dem Stellwert gehöriger Ist-Wert des Ventils 16, bereitgestellt.

In Schritt S3 wird der wenigstens eine Wert des PAA und der wenigstens eine Wert des PAE der SPS 4 dem erweiterten Aktor-Gerätemodell 21 übergeben. In der Figur 5 ist dies durch strichpunktierte Pfeile 23, 24 angedeutet, die von dem PAA bzw. PAE der SPS 4 zu dem erweiterten Aktor-Gerätemodell 21 zeigen.

In Schritt S4 wird aus dem wenigstens einen Wert des PAE mittels der einen oder mehreren inversen Funktionen der Erweiterung 22 wenigstens ein Stellwert, der einen Eingangswert des Aktors 15 repräsentiert, zurückberechnet.

Es kann in Schritt S5 eine Zuordnungstabelle herangezogen werden, um den wenigstens einen berechneten Stellwert wenigstens einen Korrespondenzwerte zuzuordnen.

In Schritt S6 kann, sofern der wenigstens eine mit den inversen mathematischen Funktionen berechnete Stellwert von dem wenigstens einen übergebenen Stellwert, der ein Teil des PAA der realen SPS 4 ist, abweicht, eine Übereinstimmung herbeigeführt werden.

Der Rückgriff auf wenigstens ein erweitertes Aktor-Gerätemodell ist besonders geeignet, wenn eine Synchronisierung zu einem Zeitpunkt erfolgen soll, wenn sich die Anlage in einem nicht stationären Zustand befindet, da aus dem Vergleich von Soll zu Ist (PPA zu PAE) ein transienter Zustand abgeleitet werden kann.

Es sei angemerkt, dass die vorstehend beschriebene, erfindungsgemäße Synchronisation natürlich auch mehrfach hintereinander durchgeführt werden kann, insbesondere, um ein "Auseinanderlaufen" von Anlage und Modell im Anschluss an eine erfolgte Synchronisierung zu vermeiden und/oder zu detektieren. Die vorstehend beschriebenen Schritte können dann beispielsweise zu vorgegebenen Zeitpunkten wiederholt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Synchronisierung eines der Simulation einer realen industriellen Anlage dienenden Anlagenmodells mit einer realen Anlage und zum Betreiben der industriellen Anlage, wobei das Verfahren folgende Schritte umfasst:

   a) es wird ein Anlagenmodell bereitgestellt, das wenigstens ein Gerätemodell (10) umfasst, das die Funktion eines realen Gerätes (3) der Anlage simulieren kann bzw. simuliert, wobei das wenigstens eine Gerätemodell (10) dazu eingerichtet ist, unter Verwendung einer oder mehrerer mathematischer Funktionen aus simulierten Eingangswerten, welche reale Eingangswerte für das wenigstens eine reale Gerät (3) repräsentieren, simulierte Ausgangswerte, welche reale Ausgangswerte des wenigstens einen realen Gerätes (3) repräsentieren, und/oder simulierte Zustandswerte, welche reale Zustandswerte der Anlage repräsentieren, zu berechnen, und wobei das wenigstens eine Gerätemodell (10) um eine oder mehrere zu der oder den mathematischen Funktionen inverse mathematische Funktionen erweitert ist,

   b) wenigstens ein aus dem Betrieb der realen Anlage stammender realer Ausgangs- und/oder Zustandswert wird bereitgestellt,

   c) der wenigstens eine reale Ausgangs- und/oder Zustandswert wird dem erweiterten Gerätemodell (10) zugeführt,

   d) mittels der einen oder mehreren inversen mathematischen Funktionen wird aus dem wenigstens einen realen Ausgangs- oder Zustandswert wenigstens ein Eingangswert zurückgerechnet,

   e) der wenigstens eine zurückgerechnete Eingangswert und/oder wenigstens ein von diesem abgeleiteter Wert wird herangezogen, um das Anlagenmodell mit der realen Anlage zu synchronisieren, und

   f) die industrielle Anlage wird unter Berücksichtigung des synchronisierten Anlagenmodells betrieben.

2. Verfahren nach Anspruch 1,
   **dadurch gekennzeichnet, dass**
   die Anlage mehrere Geräte umfasst und

   - in Schritt a) ein Anlagenmodell bereitgestellt wird, welches für mehrere, insbesondere alle realen Geräte (3) der Anlage jeweils ein Gerätemodell (10) umfasst, das die Funktion des jeweiligen realen Gerätes (3) der Anlage simulieren kann bzw. simuliert, wobei das jeweilige Gerätemodell (10) dazu eingerichtet ist, unter Verwendung einer oder mehrerer mathematischer Funktionen aus simulierten Eingangswerten, welche reale Eingangswerte für das wenigstens eine reale Gerät (3) repräsentieren, simulierte Ausgangswerte, welche reale Ausgangswerte des wenigstens einen realen Gerätes (3) repräsentieren, und/oder simulierte Zustandswerte, welche reale Zustandswerte der Anlage repräsentieren, zu berechnen, und wobei das jeweilige Gerätemodell (10) um eine oder mehrere zu der oder den Funktionen des jeweiligen Gerätemodells (10) inverse mathematische Funktionen erweitert ist, und

   - in Schritt b) für wenigstens zwei Geräte jeweils wenigstens ein aus dem Betrieb der realen Anlage stammender realer Ausgangs- und/oder Zustandswert bereitgestellt wird, und

   - in Schritt c) der jeweilige wenigstens eine reale Ausgangs- und/oder Zustandswert dem jeweiligen erweiterten Gerätemodell (10) zugeführt wird,

- in Schritt d) mittels der einen oder mehreren inversen mathematischen Funktionen des jeweiligen erweiterten Gerätemodells (10) aus dem jeweiligen wenigstens einen realen Ausgangs- und/oder Zustandswert wenigstens einen zurückgerechneten Eingangswert berechnet wird,

- in Schritt e) zurückgerechneten Eingangswerte und/oder von diesen abgeleitete Werte herangezogen, um das Anlagenmodell mit der realen Anlage zu synchronisieren.

3. Verfahren nach Anspruch 2,
**dadurch gekennzeichnet, dass**
wenigstens eines der erweiterten Gerätemodelle (10) durch ein Messumformer-Gerätemodell, das dazu eingerichtet ist, die Funktion eines Messumformers (3) der realen Anlage, der reale Eingangswerte zu realen Ausgangswerten verarbeitet, zu simulieren, gegeben ist oder ein solches umfasst.

4. Verfahren nach Anspruch 2,
**dadurch gekennzeichnet, dass**
wenigstens eines der erweiterten Gerätemodelle (10) durch ein Aktor-Gerätemodell, das dazu eingerichtet ist, die Funktion eines Aktors der realen Anlage zu simulieren, gegeben ist oder ein solches umfasst.

5. Verfahren nach Anspruch 4,
**dadurch gekennzeichnet, dass**
in Schritt b) wenigstens ein Wert des Prozessabbildes der Ausgänge einer realen insbesondere speicherprogrammierbaren Steuerung der realen Anlage und wenigstens ein Wert des Prozessabbildes der Eingänge einer realen insbesondere speicherprogrammierbaren Steuerung der realen Anlage bereitgestellt wird, und bevorzugt in Schritt d) mit der oder den inversen mathematischen Funktionen des erweiterten Aktor-Gerätemodells aus dem wenigstens einen Wert des Prozessabbildes der Eingänge wenigstens ein Aktor-Eingangswert zurückgerechnet und bevorzugt mit dem wenigstens einen Wert des Prozessabbilds der Ausgänge der realen insbesondere speicherprogrammierbaren Steuerung der realen Anlage verglichen wird, und besonders bevorzugt für den Fall, dass eine Abweichung vorliegt, eine Übereinstimmung herbeigeführt wird.

6. Verfahren nach einem der vorhergehenden Ansprüche, **dadurch gekennzeichnet, dass**
in Schritt b) wenigstens ein realer Ausgangswert, der an der realen Anlage erfasst wurde, bereitgestellt wird.

7. Verfahren nach einem der vorhergehenden Ansprüche, **dadurch gekennzeichnet, dass**
in Schritt b) mehrere reale Ausgangswerte bereitgestellt werden, wobei insbesondere wenigstens eine Sequenz von mehreren, an aufeinanderfolgenden Zeitpunkten erfassten realen Ausgangswerten bereitgestellt wird.

8. Verfahren nach einem der vorhergehenden Ansprüche, **dadurch gekennzeichnet, dass**
in Schritt b) als wenigstens ein realer Ausgangswert zumindest ein Teil des Prozessabbilds der Eingänge (PAE) und/oder zumindest ein Teil des Prozessabbilds der Ausgänge (PAA) einer insbesondere speicherprogrammierbaren Steuerung (4) der realen Anlage bereitgestellt wird.

9. Verfahren nach einem der vorhergehenden Ansprüche, **dadurch gekennzeichnet, dass**
unter Verwendung wenigstens einer Zuordnungstabelle und/oder Kennlinie dem in Schritt d) berechneten wenigstens einen zurückgerechneten Eingangswert wenigstens ein Korrespondenzwert zugeordnet und der wenigstens eine Korrespondenzwert dem Anlagenmodell in Schritt e) als abgeleiteter Wert zugeführt wird.

10. Verfahren nach einem der vorhergehenden Ansprüche, **dadurch gekennzeichnet, dass**
das wenigstens eine erweiterte Gerätemodell (10) die Funktionsweise des und insbesondere eine Skalierung und/oder Normalisierung und/oder Filterung von Eingangswerten durch ein reales Gerät (3) nachbildet.

11. Vorrichtung, die zur Durchführung des Verfahrens nach einem der vorhergehenden Ansprüche ausgebildet und eingerichtet ist.

12. Computerprogrammprodukt, umfassend Programmcode-Mittel zur Durchführung des Verfahrens nach einem der Ansprüche 1 bis 10.

13. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 10 durchzuführen.

**Claims**

1. Method for synchronisation of a system model used to simulate a real industrial system with a real system and for operating the industrial system, wherein the method comprises the following steps:

    a) a system model is provided, comprising at least one device model (10) that simulates or can simulate the operation of a real device (3) of the system, wherein, using one or more mathematical functions, the at least one device model (10) is designed to calculate simulated output values, which represent real output values of the at least one real device (3), and/or simulated state values, which represent real state values of the system, from simulated input values which represent real input values for the at least one real device (3), and wherein the at least one device model (10) is extended to include one or more mathematical functions that are the inverse of said mathematical function(s),
b) at least one real output and/or state value originating from the operation of the real system is provided,
c) the at least one real output and/or state value is fed to the extended device model (10),
d) using the one or more inverse mathematical functions, at least one input value is calculated back from the at least one real output and/or state value,
e) the at least one back-calculated input value and/or at least one value derived therefrom is used to synchronise the system model with the real system, and
f) the industrial system is operated by taking into account the synchronised system model.

2. Method according to claim 1,
   **characterised in that**
   the system comprises a plurality of devices and

   - in step a) a system model is provided which comprises a device model (10) for a plurality of, in particular all the real devices (3) of the system, which simulates or can simulate the operation of the respective real device (3) of the system, wherein, using one or more mathematical functions, the respective device model (10) is designed to calculate simulated output values which represent real output values of the at least one real device (3), and/or simulated state values which represent real state values of the system, from simulated input values which represent real input values for the at least one real device (3), and wherein the respective device model (10) is extended to include one or more mathematical functions that are the inverse of the function or functions of the respective device model (10), and
   - in step b), for at least two devices, at least one real output and/or state value originating from operation of the real system is provided in each case, and
   - in step c) the respective at least one real output and/or state value is fed to the respective extended device model (10),

- in step d) at least one back-calculated input value is calculated from the respective at least one real output and/or state value by means of the one or more inverse mathematical functions of the respective extended device model (10),
- in step e) back-calculated input values and/or values derived therefrom are used to synchronise the system model with the real system.

3. Method according to claim 2,
   **characterised in that** at least one of the extended device models (10) is constituted by or comprises a transmitter device model which is designed to simulate the operation of a transmitter (3) of the real system and which processes real input values into real output values.

4. Method according to claim 2,
   **characterised in that**
   at least one of the extended device models (10) is constituted by or comprises an actuator device model which is designed to simulate the operation of an actuator of the real system.

5. Method according to claim 4,
   **characterised in that**
   in step b) at least one value of the process image of the outputs of a real, in particular programmable, controller of the real system and at least one value of the process image of the inputs of a real, in particular programmable, controller of the real system is provided, and preferably in step d) using the inverse mathematical function or functions of the extended actuator device model, at least one actuator input value is calculated back from the at least one value of the process image of the inputs and preferably compared with the at least one value of the process image of the outputs of the real, in particular programmable, controller of the real system, and, with particular preference, alignment is brought about in the event of a deviation.

6. Method according to one of the preceding claims,
   **characterised in that**
   in step b) at least one real output value acquired on the real system is provided.

7. Method according to one of the preceding claims,
   **characterised in that**
   in step b) a plurality of real output values are provided, wherein in particular at least one sequence of a plurality of real output values acquired at successive points in time is provided.

8. Method according to one of the preceding claims,
   **characterised in that**
   in step b) at least part of the process image of the inputs (PII) and/or at least part of the process image of the outputs (PIQ) of an in particular programmable controller (4) of the real system is provided as at least one real output value.

9. Method according to one of the preceding claims, **characterised in that** using at least one assignment table and/or characteristic curve, at least one correspondence value is allocated to the at least one back-calculated input value calculated in step d) and the at least one correspondence value is fed to the system model in step e) as a derived value.

10. Method according to one of the preceding claims, **characterised in that** the at least one extended device model (10) simulates the mode of operation of the and, in particular, a scaling and/or normalisation and/or filtering of input values by a real device (3).

11. Apparatus which is designed and set up to carry out the method according to one of the preceding claims.

12. Computer program product comprising program code means for carrying out the method according to one of claims 1 to 10.

13. Computer-readable medium containing instructions which, when executed on at least one computer, cause the at least one computer to carry out the steps of the method according to one of claims 1 to 10.

**Revendications**

1. Procédé de synchronisation d'un modèle d'installation servant à la simulation d'une installation industrielle réelle, comprenant une installation réelle et pour le fonctionnement de l'installation de l'installation industrielle, dans lequel le procédé comprend les stades suivants :

   a) on se procure un modèle d'installation, qui comprend au moins un modèle (10) d'appareil, qui peut simuler ou qui simule la fonction d'un appareil (3) réel de l'installation, dans lequel le au moins un modèle (10) d'appareil est conçu pour, en utilisant une ou plusieurs fonctions mathématiques, calculer, à partir de valeurs d'entrée simulées, qui représentent des valeurs d'entrée réelles du au moins un appareil (3) réel, des valeurs de sortie simulées, qui représentent des valeurs de sortie réelles du au moins un appareil (3) réel, et/ou des valeurs d'état simulées, qui représentent des valeurs d'état réelles de l'installation, et dans lequel le au moins un modèle (10) d'appareil est étendu d'une ou de plusieurs fonctions mathématiques inverses de la ou des fonctions mathématiques,
   b) on se procure une valeur de sortie et/ou d'état réelle provenant du fonctionnement de l'installation réelle,
   c) on apporte la au moins une valeur de sortie et/ou d'état réelle au modèle (10) d'appareil étendu,
   d) au moyen de la une ou des plusieurs fonctions mathématiques inverses, on recalcule au moins une valeur d'entrée à partir de la au moins une valeur de sortie et/ou d'état réelle,
   e) on tire parti de la au moins une valeur d'entrée recalculée et/ou d'au moins une valeur déduite de celle-ci pour synchroniser le modèle de l'installation à l'installation réelle, et
   f) on fait fonctionner l'installation industrielle en tenant compte du modèle d'installation synchronisée.

2. Procédé suivant la revendication 1, **caractérisé en ce que** l'installation comprend plusieurs appareils et

   - dans un stade a), on se procure un modèle d'installation, qui comprend pour plusieurs, notamment pour tous les appareils (3) réels de l'installation, respectivement un modèle (10) d'appareil, qui peut simuler ou qui simule la fonction de l'appareil (3) réel respectif de l'installation, dans lequel le modèle (10) d'appareil respectif est conçu pour, en utilisant une ou plusieurs fonctions mathématiques, calculer, à partir de valeurs d'entrée simulées, qui représentent des valeurs d'entrée réelles du au moins un appareil (3) réel, des valeurs de sortie simulées, qui représentent des valeurs de sortie du au moins un appareil (3) réel, et/ou des valeurs d'état simulées, qui représentent des valeurs d'état réelles de l'installation et dans lequel le modèle (10) d'appareil respectif est étendu d'une ou de plusieurs fonctions mathématiques inverses de la ou des fonctions du modèle (10) d'appareil respectif, et
   - dans un stade b), pour au moins deux appareils, on se procure respectivement au moins une valeur de sortie et/ou d'état réelle provenant du fonctionnement de l'installation réelle, et
   - dans un stade c), on apporte la au moins une valeur de sortie et/ou d'état réelle respective au modèle (10) d'appareil étendu respectif,
   - dans un stade d), au moyen de la une ou des plusieurs fonctions mathématiques inverses du modèle (10) d'appareil étendu respectif, on calcule au moins une valeur d'entrée recalculée à partir de la au moins une valeur de sortie et/ou d'état réelle respective,
   - dans un stade e), on tire parti de valeurs d'entrée recalculées et/ou de valeurs déduites de celles-ci pour synchroniser le modèle d'installation à l'installation réelle.

3. Procédé suivant la revendication 2, **caractérisé en ce qu'**
au moins l'un des modèles (10) d'appareil étendus est donné par un modèle d'appareil de transducteur de mesure ou en comprend un, qui est conçu pour simuler la fonction d'un transducteur (3) de mesure de l'installation réelle, qui transforme des valeurs d'entrée réelles en des valeurs de sortie réelles.

4. Procédé suivant la revendication 2, **caractérisé en ce qu'**
au moins l'un des modèles (10) d'appareil étendus est donné par un modèle d'appareil d'actionneur ou en comprend un, qui est conçu pour simuler la fonction d'un actionneur de l'installation réelle.

5. Procédé suivant la revendication 4, **caractérisé en ce qu'**
au stade b), on se procure au moins une valeur de la représentation de processus des sorties d'une commande réelle, notamment d'un automate programmable, de l'installation réelle et au moins une valeur de la représentation de processus des entrées d'une commande réelle, notamment d'un automate programmable, de l'installation réelle et, de préférence, au stade d), avec la ou les fonctions mathématiques inverses du modèle d'appareil d'actionneur étendu, on recalcule, à partir d'au moins une valeur de la représentation de processus des entrées, au moins une valeur d'entrée d'actionneur et, de préférence, on la compare à la au moins une valeur de la représentation de processus des sorties de la commande réelle, notamment de l'automate programmable, de l'installation réelle et, d'une manière particulièrement préférée, dans le cas où il y a un écart, on provoque une concordance.

6. Procédé suivant l'une des revendications précédentes, **caractérisé en ce que**
dans le stade b), on se procure au moins une valeur de sortie réelle, qui a été relevée sur l'installation réelle.

7. Procédé suivant l'une des revendications précédentes, **caractérisé en ce qu'**
au stade b), on se procure plusieurs valeurs de sortie réelles, dans lequel notamment on se procure au moins une séquence de plusieurs valeurs de sortie réelles relevées à des instants successifs.

8. Procédé suivant l'une des revendications précédentes, **caractérisé en ce qu'**
au stade b), on se procure, comme au moins une valeur de sortie réelle, au moins une partie de la représentation de processus des entrées (PAE) et/ou au moins une partie de la représentation de processus des sorties (PAA) d'une commande (4), notamment d'un automate programmable, de l'installation réelle.

9. Procédé suivant l'une des revendications précédentes, **caractérisé en ce qu'**
en utilisant au moins une table d'affectation et/ou une courbe caractéristique, on associe, à la au moins une valeur d'entrée recalculée calculée au stade d), au moins une valeur correspondante et on apporte la au moins une valeur correspondante comme valeur déduite au modèle d'installation au stade e).

10. Procédé suivant l'une des revendications précédentes, **caractérisé en ce que**
le au moins un modèle (10) d'appareil étendu reproduit le mode de fonctionnement et notamment une mise à l'échelle et/ou une mise à la norme et/ou un filtrage de valeurs d'entrée par un appareil (3) réel.

11. Installation, qui est constituée et conçue pour effectuer le procédé suivant l'une des revendications précédentes.

12. Produit de programme d'ordinateur comprenant des moyens de code de programme pour effectuer le procédé suivant l'une des revendications 1 à 10.

13. Support, déchiffrable par ordinateur, qui comprend des instructions qui, lorsqu'elles sont exécutées sur au moins un ordinateur, font que le au moins un ordinateur effectue les stades du procédé suivant l'une des revendications 1 à 10.

FIG 1

FIG 2

EP 3 830 652 B1

# FIG 3

EP 3 830 652 B1

# FIG 4

FIG 5

EP 3 830 652 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016222732 A1

**In der Beschreibung aufgeführte Nicht-Patentliteratur**

- *Katalog "Siemens STPCS7T,* April 2013, 4-2, 4-6
- Prozessleitsystem SIMATIC PCS 7 Band 2: Technologiekomponenten. *Katalog ST PCS 7 T,* 2018, https://cache.industry.siemens.com/dl/files/634/109745634/att_942236/v1/KG_STPCS7T_de.pdf
- **T. HEINZERLING ; M. OPPELT ; T. BELL.** *Gerätemodelle in Prozesssimulationen integrieren,* 2017, vol. 59 (10), 34-45